Europäisches Patentamt

European Patent Office

Office européen des brevets

(11) Publication number: **0 303 055**
**A1**

## (12) EUROPEAN PATENT APPLICATION

(21) Application number: **88110987.0**

(22) Date of filing: **09.07.88**

(51) Int. Cl.⁴: **C10M 111/04 , C10M 169/04 ,
C09G 3/00 , //(C10M111/04,
101:02,103:02,103:04,103:06,
107:38),(C10M169/04,101:02,
125:02,125:04,147:02),
C10N20:06,C10N30:06,
C10N40:00**

(30) Priority: **28.07.87 IT 2147187**

(43) Date of publication of application:
**15.02.89 Bulletin 89/07**

(84) Designated Contracting States:
**AT CH DE FR IT LI SE**

(71) Applicant: **BRICO S.r.l.**
**Via Cesare Battisti, 15**
**28040 DORMELLETTO NO(IT)**

(72) Inventor: **Giancarlo, Albanesi**
**Via Durazzo, 5**
**I-20134 Milano MI(IT)**

(74) Representative: **Trupiano, Roberto**
**BREVETTI EUROPA S.r.l. Piazza Bernini, 6**
**I-20133 Milano (MI)(IT)**

(54) **Low friction coefficient lubricating composition for soles of skis, sledges and the like.**

(57) Solid lubricating composition (ski wax), particularly suitable for being applied to the sliding surfaces, or "soles" of skis, sledges and the like, in order to increase their slipperiness, comprising 60-95% of paraffin and/or microcrystalline waxes and 5-40% of a finely subdivided polytetrafluoroethylene powder, with the average granulometry of said polytetrafluoroethylene powder being lower than 8 micron, preferably comprised within the range of from 1 to 5 micron, with the possible addition of electroconductive material powders, suitable for preventing electrostatic charges from forming and accumulating.

EP 0 303 055 A1

# LOW FRICTION COEFFICIENT LUBRICATING COMPOSITION FOR SOLES OF SKIS, SLEDGES AND THE LIKE

The present invention relates to a low friction coefficient lubricating composition particularly suitable for being applied to the sliding surfaces or "soles" of skis, sledges and the like, in order to increase their slipperiness on snow.

It is known that the "sliding ability" of the sliding surface, or sole, of a ski on snow depends, besides the material the sole is made from, usually high-density polyethylene, to a determining extent, on the type and characteristics of the ski wax which is applied to the same sole, in order to increase its sliding characteristics, preventing snow from adhering to it.

The presently most widely used ski waxes for the present soles of polymeric nature, and in particular of polyethylenic nature, are normally blends of paraffins and microcrystalline waxes, variously formulated as a function of snow type and of the environmental conditions under which the ski waxes are used. In particular, for the soles of skis, and the like, linear and/or branched hydrocarbons are preferably used, which contain from approximately 12 to approximately 50 carbon atoms, in that such hydrocarbons, thanks to their chemical nature, are easily adsorbed and retained by the polyethylene sole surface.

In order to improve the performance of the skis on snow, and, in particular, their slipperiness, and therefore their speed and/or manageability, the present trend is therefore aiming at improving both the characteristics of the material the sole is constituted by, and the characteristics of the ski waxes to be applied to the same soles.

The purpose of the present invention is to provide a solid lubricating product, viz., a ski wax, to be applied to the sliding surfaces of skis, sledges and the like, having a low friction coefficient and such as to considerably increase the characteristics of slipperiness of said sliding surfaces.

Another purpose of the present invention is to provide a ski wax endowed with a high chemical inertness, with particular water-oil-repellant properties, and endowed with an improved abrasion resistance, and therefore capable of remaining for a longer time on the ski soles before being removed owing to the effect of rubbing of the same sole on snow.

These purposes and related advantages, and still further purposes and advantages which can be evidenced by the following disclosure, are achieved by a solid lubricating composition particularly suitable for being applied to the sliding surfaces, or soles, of skis, sledges and the like, in order to improve their characteristics of slipperiness, which lubricating composition, according to the present invention, comprises:

A) Paraffinic and/or microcrystalline waxes and/or their mixtures, selected from the group comprising the fractions with dropping point comprised within the range of from 46-48° C to 80-85° C; and

B) Finely subdivided polytetrafluoroethylene (PTFE) powder, with said (B) polytetrafluoroethylene being uniformly incorporated and dispersed in said (A) paraffinic wax.

More particularly, the average particle size of said polyetetrafluoroethylene incorporated and dispersed in said paraffinic wax is smaller than 6 micron, and is preferably comprised within the range of from 1 to 5 micron. The present Applicant could in fact surprisingly oberve that the particle size of the polytetrafluoroehylene particles incorporated in the paraffinic wax has a conclusive effect for the purposes of the slipperiness of the sliding surfaces, or soles, of the ski to which said lubricating composition is applied. More precisely, as it will be better clarified from the hereinunder reported example, if the slipperiness of a ski equipped with a polyethylene sole waxed with a traditional paraffinic wax is given a conventional value of 100, the slipperiness of a ski waxed with the same paraffinic wax, into which 25% by weight is incorporated of a polytetrafluoroethylene powder having an average granulometry of approximately 8 micron reached a value of 101.5, whilst the slipperiness of a ski waxed with the same paraffinic wax into which 25% is incorporated of a polytetrafluoroethylene having an average granulometry smaller than 5 micron, increases up to approximately 108.

The amount of finely subdivided polytetrafluoroethylene (the (B) constituent) which is incorporated in the paraffinic wax, or in the blend of paraffinic and microcrystalline waxes (the (A) constituent), according to the present invention, can widely vary, according to the type of ski wax which one desires to obtain, for example, whether for cross-country skis or for downhill skis, whether for cold snow, damp snow, or powdery snow, and so forth, within a range comprised from 5 to 40% by weight relatively to the lubricating composition.

Still according to the present invention, to the composition containing the (A) and (B) constituents, a third, (C), constituent can be advantageously added, which is constituted by an electroconductive material, in a finely subdivided powder form, and also evenly dispersed and incorporated in said (A) paraffinic wax. Such an electroconductive material performs the function of preventing electrostatic charges from forming and accumulating on same (B) polytetrafluoroethylene (the (B) constituent), owing to the rubbing of the same PTFE on the snow mantle, a phenomenon which is particularly intense at high speeds, and on dry snow mantles. As the electroconductive materials, the materials selected from the group consisting of graphite, aluminum, copper and bronze in the form of a fine powder of granulometry smaller than 20 micron result to be particularly suitable, and are used in an amount comprised within the range of from 5 to 40% by weight relatively to the total composition weight, preferably in the ratio of 1:1 by weight relatively to polytetrafluoroethylene.

The incorporation of polytetrafluoroethylene, as well as the incorporation of the electroconductive material, in the paraffinic wax takes place according to traditional processes known in the art, e.g., by melting the wax and dispersing polytetrafluoroethylene and the above said electroconductive material in the liquid wax with this latter being kept stirred, and then allowing the obtained dispersion to cool down, or the incorporation can be carried out by maintaining the wax in the a soft paste-like state and adding the other components on a suitable mixer, until the blend is completely homogeneous, then pouring said homogeneous blend into suitable moulds, inside which it is given its end shape and is allowed to cool down.

The waxing composition according to the present invention shows also the advantage, as compared to the traditional ski waxes, that it offers a greater oil-water-repellency and therefore a higher resistance of the sliding surface of the sole to the soiling and to the wettability, thanks to the combination of the peculiar characteristics of polytetrafluoroethylene with those of the paraffinic waxes.

The lubricating composition according to the present invention is applied to the sliding surfaces, such as the ski soles, the sliding elements of sledges and the like, according to the processes known in the art for the application of the traditional ski waxes, for example by melt-spreading and following polishing, or by means of the application as a paste, or by simple cold-rubbing, and the like.

The following example, given for merely illustrative and non-limitative purposes, is used in order to better illustrate the purposes and the advantages of the present invention.

Example

On a snow course, with a snow temperature of -4°C, an air temperature of -6°C, a relative humidity of approximately 75%, approximately 800 meters long and subdivided into three stretches of different slope, with the first stretch having a slope of 25%, the second stretch having a slope of 14% and the third stretch having a slope of 1%, equipped with photoelectric-cell speed detectors in each stretch, five runs were carried out by three skiers, each equipped with three identical ski pairs, with the first ski pair, denominated as "1", being waxed with a traditional ski wax constituted by a blend of paraffinic waxes with a dropping point of 54-56°C and 72-75°C, the second pair, denominated as "2", being waxed with a ski wax constituted by 75% by weight of the same blend of paraffinic waxes as used for the ski pair No. 1, and by 25% by weight of "ALGOFLON" polytetrafluoroethylene powder (by MONTEFLUOS) having an average granulometry of 8 micron, and with the third ski pair, denominated as "3", being waxed with a ski wax constituted by 75% of the same blend as of ski pairs No. 1 and No. 2, and 25% by weight of "ALGOFLON" polytetrafluoroethylene powder having an average particle size of 3 micron. The time values of each skier were determined for each different-slope course stretch as the average value of five runs, so as to have for each run three time values for No.1 skis, i.e., $T_{1-1}$, $T_{1-2}$ and $T_{1-3}$; three time values for No. 2 skis, i.e, $T_{2-1}$, $T_{2-2}$ and $T_{2-3}$; and three time values for No. 3 skis, i.e, $T_{3-1}$, $T_{3-2}$ and $T_{3-3}$. The "time gain", taken as the index of "slipperiness", and therefore of the efficacy of the ski wax, was determined according to the formula:

$(T_1 - T_{2/3}) \times 100/T_1$

The following average results were obtained:
- For the first stretch (slope of 25%)
$(T_{1-1} - T_{2-1}) \times 100/T_{1-1} = 1.1\%$
$(T_{1-1} - T_{3-1}) \times 100/T_{1-1} = 5.2\%$
- For the second stretch (slope of 14%)
$(T_{1-2} - T_{2-2}) \times 100/T_{1-2} = 1.3\%$
$(T_{1-2} - T_{3-2}) \times 100/T_{1-2} = 7.0\%$
- For the third stretch (slope of 1%)
$(T_{1-3} - T_{2-3}) \times 100/T_{1-3} = 1.9\%$
$(T_{1-3} - T_{3-3}) \times 100/T_{1-3} = 11.1\%$

Therefore, the average increase in slipperiness of ski No. 2 relatively to ski No. 1 was of 1.43%, whilst, particularly surprisingly, the increase in slipperiness of ski No. 3, waxed with a lubricating composition according to the present invention incorporating polytetrafluoroethylene powder having an average particle size of approximately 3 micron, the increase in slipperiness over ski No. 1, with the other conditions being the same, was of 7.76%. It was furthermore observed that the skis No. 1 decreased in slipperiness with time, and that the time values between the last two runs and the first two runs had increased by approximately 7%, whilst the time values for skis No. 2 and No. 3 remained substantially constant from the beginning to the end of the tests. From this fact, it clearly appears that with a ski wax based on normal paraffins, a progressive soiling of the sole occurs, with a consequent increase in friction coefficient, and a reduction in sliding ability or slipperiness of the ski, whilst when the ski wax according to the present invention is used, such a drawback does not occur.

The lubricant according to the present invention can be advantageously used, besides on the sliding surfaces of skis, sledges, and the like, on any other sliding surfaces for which a high degree of slipperiness, and a high degree of oil- water-repellency is desired, such as, e.g., hulls of boats and the like, or still others surfaces, with the (A) paraffinic constituent being suitably adapted.

To the invention as hereinabove disclosed technically equivalent variants may be of course supplied, with all of them being within the scope of protection of the same invention.

**Claims**

1. Solid lubricating composition particularly suitable for being applied to the sliding surfaces, or "soles", of skis, sledges and the like, in order to increase their slipperiness, characterized in that it comprises:
A) paraffinic and/or microcrystalline waxes and/or their mixtures, selected from the group comprising the fractions with a dropping point comprised within the range of from 46-48°C to 80-85°C; and
B) finely subdivided polytetrafluoroethylene (PTFE) powder,
with said (B) polytetrafluoroethylene being uniformly dispersed and incorporated in said (A) paraffinic wax.

2. Solid lubricating composition according to claim 1, characterized in that the average granulometry of said (B) polytetrafluoroethylene is smaller than 8 micron and is preferably comprised within the range of from 1 to 5 micron.

3. Lubricating composition according to claim 1, characterized in that said (B) polytetrafluoroethylene is contained in said lubricating composition in an amount comprised within the range of from 5 to 40% by weight relatively to said lubricating composition, preferably of from 20 to 25% by weight.

4. Solid lubricating composition according to claim 1, characterized in that it comprises a third (C) constituent, constituted by an electroconductive material in the form of a finely subdivided powder, selected from the group consisting of graphite, aluminum, copper and bronze, also uniformly dispersed and incorporated in said (A) paraffinic wax in an amount comprised within the range of from 5 to 40% by weight relatively to the total weight of the composition.

European Patent Office

**EUROPEAN SEARCH REPORT**

Application Number

EP 88 11 0987

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 132 879 (ENICHIMICA)<br>* Claims 1,7-12 *<br>--- | 1-4 | C 10 M 111/04<br>C 10 M 169/04<br>C 09 G 3/00 //<br>(C 10 M 111/04<br>C 10 M 101:02<br>C 10 M 103:02<br>C 10 M 103:04<br>C 10 M 103:06<br>C 10 M 107:38 )<br>(C 10 M 169/04<br>C 10 M 101:02<br>C 10 M 125:02<br>C 10 M 125:04<br>C 10 M 147:02 )<br>C 10 N 20:06<br>C 10 N 30:06<br>C 10 N 40:00 |
| Y | CH-A- 660 018 (IMS KUNSTSTOFF)<br>* Claims 1-8 *<br>--- | 1,4 | |
| Y | BE-A- 684 152 (EVRO-PRGRAMM-ANSTALT)<br>* Claims 1,2; page 6 *<br>--- | 1-3 | |
| Y | US-A-3 432 511 (V.G. REILING)<br>* Claims 1,2; column 4, lines 1-4;<br>column 5, lines 3-15 *<br>----- | 1-4 | |

TECHNICAL FIELDS
SEARCHED (Int. Cl.4)

C 10 M
C 09 G

The present search report has been drawn up for all claims

| Place of search | Date of completion of the search | Examiner |
|---|---|---|
| THE HAGUE | 06-12-1988 | ROTSAERT L.D.C. |